# EUROPEAN PATENT SPECIFICATION

(11) **EP 1 096 761 B1**
(45) Date of publication and mention of the grant of the patent: **15.02.2006**
(21) Application number: 00309358.0
(22) Date of filing: 24.10.2000
(51) Int. Cl.: H04M 1/723, H04M 1/725

(54) **Communication system via first communication line with a first communication apparatus and via a second communication line with a second communication apparatus**
Kommunikationssystem über eine erste Kommunikationsleitung mit einem ersten Kommunikationsgerät und über eine zweite Kommunikationsleitung mit einem zweiten Kommunikationsgerät
Système de communication sur une première ligne avec un premier appareil de communication et sur une seconde ligne avec un deuxième appareil de communication

(30) Priority: 25.10.1999 JP 30230799
(43) Date of publication of application: 02.05.2001
(73) Proprietor: CANON KABUSHIKI KAISHA, Tokyo (JP)
(72) Inventor: Ezumi, Yosuke, Ohta-ku, Tokyo (JP); Iguchi, Junji, Ohta-ku, Tokyo (JP); Nakamura, Yasuyuki, Ohta-ku, Tokyo (JP); Yoshida, Takehiro, Ohta-ku, Tokyo (JP); Fujise, Shunichi, Ohta-ku, Tokyo (JP); Watanabe, Naoya, Ohta-ku, Tokyo (JP)
(74) Representative: Beresford, Keith Denis Lewis

(56) References cited:
- EP-A- 0 865 186
- WO-A-98/11760
- WO-A-98/47300
- WO-A-99/49682
- FR-A- 2 762 739
- US-A- 5 528 666
- US-A- 5 590 414

## Description

The present invention relates to a communication system having a first communication apparatus capable of communication via a first communication line and a second communication apparatus capable of communication via a second communication line, and to communication apparatus used for the system.

### Related Background Art

Wireless portable telephones and personal handy-phone system (PHS) telephones are greatly prevailing nowadays, and some people have more than one telephone.

A user can hold a wireless telephone in hand and can make a telephone conversation anywhere and anytime. It is a great convenience for a user to have such a telephone.

Many telephones have no hands-free function for hands-free talking. Even if a wireless portable telephone or PHS telephone is provided with the hands-free function, the sound quality is not good because a small speaker and a small microphone built in the telephone are used.

The distribution of facsimile apparatus, which are typical communication apparatus connectable to a public telephone line, is very high. The future use of a facsimile apparatus is considered not to be lowered, because an original image or text can be easily transmitted or received.

Household telephones are being increasingly replaced by facsimile apparatus which are provided with a hands-free talking function and an automatic answering telephone. Acoustic components used with a facsimile apparatus having the hands-free talking function have good characteristics. A dedicated echo canceler is also built in a facsimile apparatus.

A wireless portable telephone or PHS telephone used via a cell system base station is required to be compact and light in weight so as to facilitate to hold it outdoors.

It cannot always be said that a compact and light telephone is easy to use. Namely, a compact telephone uses a compact speaker so that the sound volume is small and the sound quality is poor, and the sensitivity of the microphone is low. Therefore, it is necessary to use the microphone and speaker set near at a user, and the so-called hands-free talking is difficult.

In addition, a small telephone has a small battery in order to reduce the weight of the telephone. If a large sound is reproduced or an echo canceler is driven for the hands-free talking, a large current flows and the battery is consumed greatly. A speech time or a standby time may be shortened. Such a telephone is not therefore suitable for indoor use.

WO 98/11760 discloses a terminal device which may be used to access both a wireline and a cellular network via the same cordless handset.

EP-A-0865186 discloses a telephone with a base having a charger for a mobile telephone and arranged such that, when the mobile telephone is connected to the base, calls made to the mobile telephone can be received by the telephone.

FR-A-2762739 discloses a device to which a mobile telephone may be connected and which, when so connected, allows calls to be made via the mobile telephone using a handset of the device, or allows a call received via the mobile telephone to be connected to a network such as a company's internal network.

It is a concern of the invention to provide communications of good quality by using communication apparatus capable of communication via different communication lines.

It is another concern of the present invention to provide an easy-to-use communication system having a first communication apparatus capable of communication via a first communication line and a second communication apparatus capable of communication via a second communication line.

It is another concern of the present invention to make a communication apparatus capable of communication by itself be usable as a communication adapter for another communication apparatus.

Aspects of the present invention are set out in the appended claims.

Other objects and features of the present invention will become apparent from the following detailed description of embodiments when read in conjunction with the accompanying drawings.

### BRIEF DESCRIPTION OF THE DRAWINGS

Figs. 1A and 1B are schematic diagrams showing the structures of a wireless telephone apparatus and a facsimile apparatus according to an embodiment of the invention.
Fig. 2 is a block diagram showing the structure of the wireless telephone apparatus 103 shown in Fig. 1.
Fig. 3 is a block diagram showing the structure of the facsimile apparatus 101 shown in Fig. 1.
Fig. 4 is a flow chart illustrating the operation of a hands-free talking process.
Figs. 5A and 5B are memory maps of a ROM 208 and a ROM 302 as storage media.

### DETAILED DESCRIPTION OF THE PREFERRED EMBODIMENTS

In the following, the description will be given for the embodiments of the invention including a wireless telephone apparatus, a communication apparatus, a wireless talking method, and a storage medium. In the embodiments, the wireless telephone apparatus is applied to a PHS (Personal Handy-phone System) telephone in Japan and the communication apparatus is applied to a facsimile apparatus.

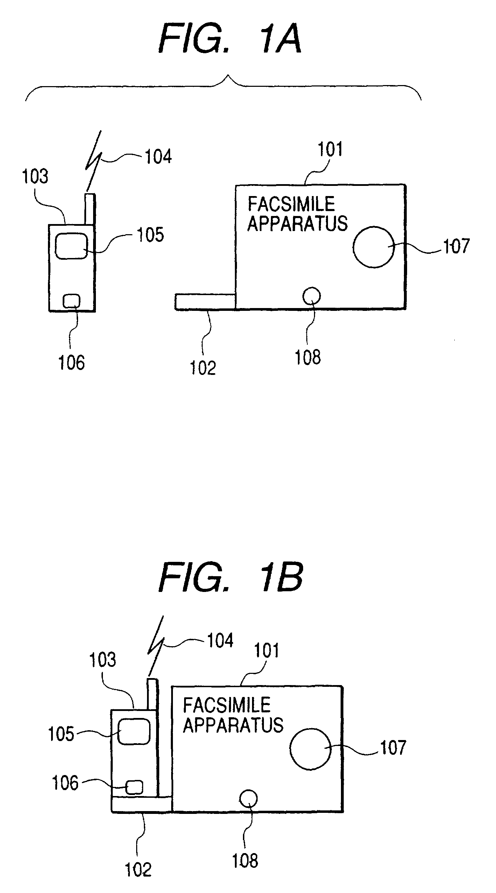

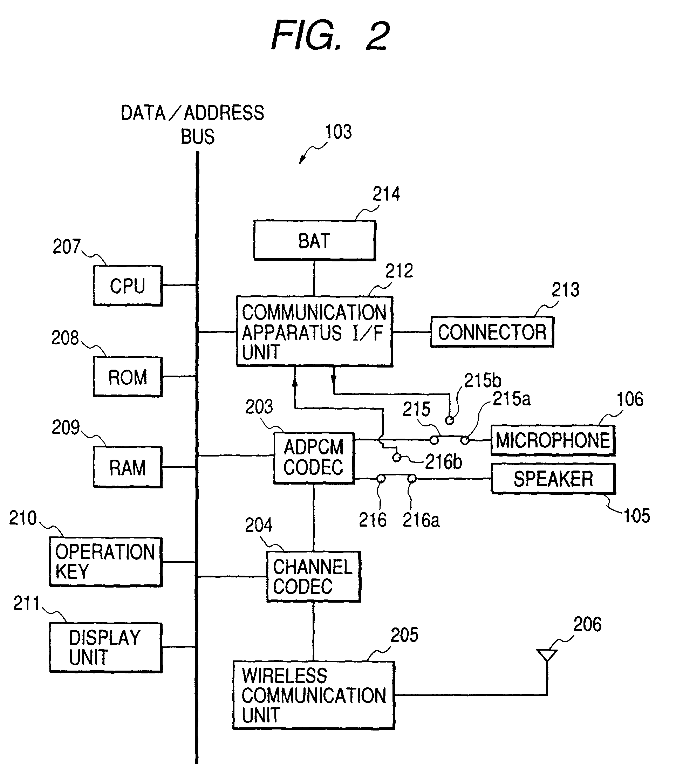

Figs. 1A and 1B are schematic diagrams showing the structures of a wireless telephone apparatus and a facsimile apparatus according to the embodiment of the invention. The facsimile apparatus 101 has a connection unit 102 for the connection to the wireless telephone apparatus 103. This connection unit 102 may be built in the facsimile apparatus 101 or detachably mounted on the facsimile apparatus 101. The facsimile apparatus 101 is connectable to a radio channel (wireless line) via the wireless telephone apparatus 103 or to a wire channel such as a PSTN channel and an ISDN channel. The wireless telephone apparatus 103 has a connection unit (corresponding to a connector 213 shown in Fig. 2).

Fig. 1A shows the state that the wireless telephone apparatus 103 is not connected to the facsimile apparatus 101. This state corresponds to the state that the wireless telephone apparatus 103 is connected to a radio channel 104 and can have a telephone conversation over the radio channel 104. In this case, a speaker 105 and a microphone 106 built in the wireless telephone apparatus 103 are used for the telephone conversation.

Fig. 1B shows the state that the wireless telephone apparatus 103 is connected to the facsimile apparatus 101. This state corresponds to that the wireless telephone apparatus 103 functions as a wireless adapter and that the facsimile apparatus is connected to a radio channel 104 via the wireless telephone apparatus 103 and can have a telephone conversation. In this case, a speaker 107 and a microphone 108 built in the facsimile apparatus 101 are used for the telephone conversation.

In this embodiment, the radio system is PHS. Other similar radio systems may also be used. For example, general wireless radio systems currently used, such as a PDC system and a CDMA system including IMT 2000, may be used. Future radio systems to be developed may also be used. A DECT (Digital European Cordless Telephone) system or a GSM (Global System for Mobile Communications) system developed in Europe may also be used.

Fig. 2 is a block diagram showing the structure of the wireless telephone apparatus 103. The wireless telephone apparatus 103 has a microphone 106, a speaker 105, an ADPCM codec 203, a channel codec 204, a wireless communication unit 205, key switches (operation keys) 210, a display unit 211, a CPU 207, a ROM 208, a RAM 209, a communication apparatus I/F unit 212, a connector 213, and a battery BAT 214.

The microphone 106 receives sounds and outputs a sound signal. The ADPCM codec 203 converts a sound signal input from the microphone 106 into an ADPCM code to transmit it over the radio channel, and converts a received ADPCM code into an analog voice signal to output it from the speaker 105. The channel codec 204 converts voice data and control data into data in conformity with a PHS communication system, and derives audio data from received data.

The radio communication unit 205 has the antenna 206 and various electronic components, the antenna 206 being used for the connection to the radio channel 104 of a base station provided by a radio common carrier. The operation keys 210 have a plurality of key switches to be used for instructing each operation. The display unit 211 may be an LCD or an LED to be used for a user to confirm the state of the wireless telephone apparatus 103 or display other data.

CPU 207 controls the whole of the wireless telephone apparatus (a child apparatus). ROM 208 stores programs and parameters to be used for controlling the whole of the wireless telephone apparatus, the programs being executed by CPU 207. RAM 209 temporarily stores parameters to be used for controlling the whole of the wireless telephone apparatus, and transmission/reception data. The battery (BAT) 214 is connected to the facsimile apparatus or communication apparatus to charge the battery, and used as the power source of the wireless telephone apparatus 103.

The communication apparatus I/F unit 212 has a circuit for detecting whether the wireless telephone apparatus 103 is connected to the facsimile apparatus 101 and a control circuit for switching an output of an audio signal to the facsimile apparatus 101. The connector 213 establishes a physical connection (electrical connection) to the facsimile apparatus 101. Signal lines connected via the connector 213 include upstream and downstream audio signal lines, power source lines for charging the battery 214, and other lines.

The switch 215 switches an audio signal input to the ADPCM codec 203 between the microphone 106 and connector 213 to transmit it via the radio channel. The switch 216 switches an output of an audio ADPCM code received via the radio channel between the speaker 105 and connector 213.

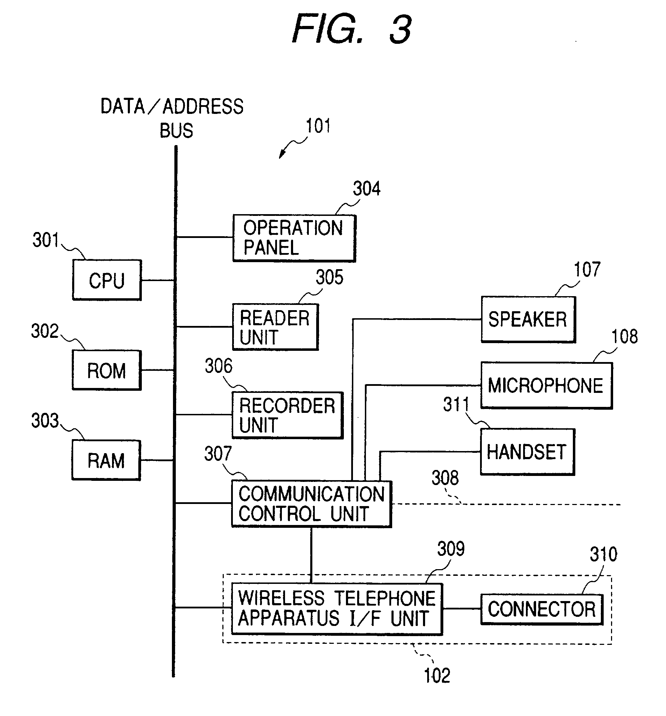

Fig. 3 is a block diagram showing the structure of the facsimile apparatus 101. The facsimile apparatus 101 is designed so that it can be connected to the wireless telephone apparatus 103.

The facsimile apparatus 101 has a CPU 301, a ROM 302, an operation panel 304, a reader unit 305, a recorder unit 306, a communication control unit 307, a microphone 108, a speaker 107, a handset 311, and a connection unit 102.

CPU 301 controls the whole of the facsimile apparatus 101. ROM 302 stores control programs and parameters to be executed by CPU 301 and used for controlling the whole of the facsimile apparatus. RAM 303 stores parameters and data necessary for the operations of CPU 301 and facsimile apparatus 101, image data and data files to be transmitted and received, data of a character code format, and the like.

The operation panel 304 is used for a user to instruct each operation of the facsimile apparatus 101 and is used for displaying the state of the facsimile apparatus 101. The reader unit 305 reads a facsimile transmission original or a copy original as a color image or a black/white image. The recorder unit 306 prints out a facsimile reception original or a copy original in color or black/white.

The communication control unit 307 performs a control and transmission/reception of a facsimile communication protocol such as G3 and G4, a control of signal modulation/demodulation, a control of a line echo canceler and an acoustic echo canceler for hands-free talking, an off-hook control and an on-hook detection for a public telephone apparatus line 308 such as PSTN and ISDN, and the like. In this embodiment, the communication control unit 307 also has a function of switching analog upstream and downstream signals transferred via the connection unit 102 between the microphone 108 and speaker 107 of the facsimile apparatus, and supplying a signal transferred via the public telephone apparatus line 308 to the handset 311 during a normal talking mode or switching the signal between the microphone 108 and speaker 107 of the facsimile apparatus during a hands-free talking mode.

The connection unit 102 has a wireless telephone apparatus I/F unit 309 and a connector 310. The wireless telephone apparatus I/F unit 309 is used for the interface with the wireless telephone apparatus 103 and has an audio signal connection circuit for receiving an audio signal from the wireless telephone apparatus 103, a power supply circuit for charging the battery BAT of the wireless telephone apparatus 103, and a circuit for detecting a connection of the wireless telephone apparatus 103. The connector 310 is physically (electrically) connected to the connector 213 of the wireless telephone apparatus 103. Signal lines connected via the connector 310 include upstream and downstream audio signal lines and power source lines for charging the battery of the wireless telephone apparatus 103.

Input/output lines of the wireless telephone apparatus I/F unit 309 are connected by the communication control unit 307 to the line echo canceler and acoustic echo canceler for the hands-free talking mode, in order to receive radio waves of audio signals transmitted from the wireless telephone apparatus 103.

Next, the connection units of the wireless telephone apparatus 103 and facsimile apparatus 101 will be described. The connector 213 connected to the communication apparatus I/F unit 212 of the wireless telephone apparatus 103 and the connector 310 connected to the wireless telephone apparatus I/F unit 309 of the facsimile apparatus 101 can be removably connected together. The signal lines connected via these connectors 213 and 310 include, as described earlier, the upstream and downstream audio signal lines used for talking via the radio channel 104, power source lines for charging the battery BAT 214 of the wireless telephone apparatus 103, and a signal line used for a detection signal notifying that the wireless telephone apparatus 103 is detected to the facsimile apparatus 101.

Digital signals such as a command signal, a response signal and a status signal are exchanged in some cases between the wireless telephone apparatus 103 and facsimile apparatus 101. Such digital signals may be exchanged by a general I/F unit such as a serial I/F unit.

Whether there is an electrical connection between the wireless telephone apparatus 103 and facsimile apparatus 101 can be confirmed: by detecting a current flowing through the connectors 213 and 310; or in addition to a detection of the current flowing through the connectors, by a presence/absence of a signal through the digital I/F unit or by a presence/absence of an audio signal during the hands-free talking mode. This electrical connection may also be confirmed, on the side of the wireless telephone apparatus 103 by a presence/absence of a charge voltage between the power source lines from the facsimile apparatus 101, and on the side of the facsimile apparatus 101 by a detection of the charge current with electronic components including a photocoupler. The electrical connection may also be confirmed by on/off of mechanical switches provided to both the wireless telephone apparatus 103 and facsimile apparatus 101.

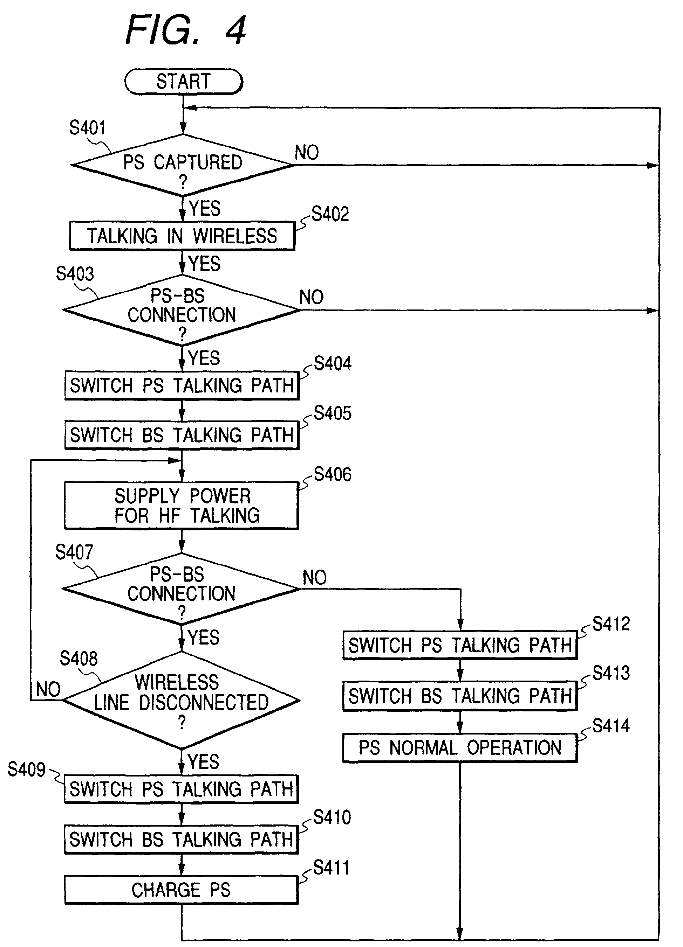

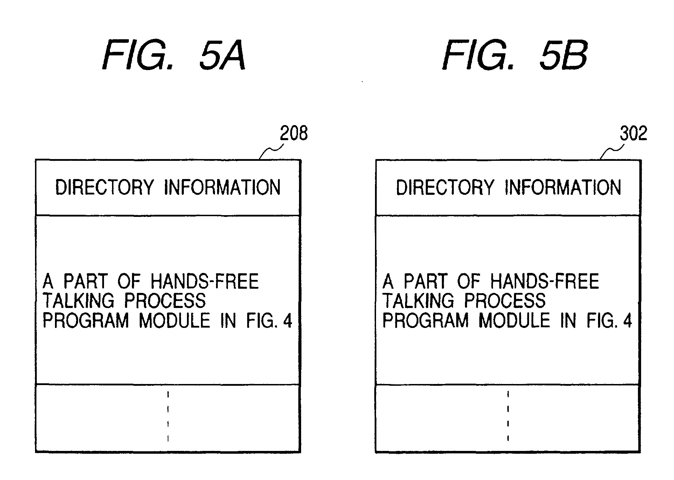

Next, the operations of the wireless telephone apparatus 103 and facsimile apparatus 101 constructed as above will be described. Fig. 4 is a flow chart illustrating the hands-free talking process. A program realizing each step shown in this flow chart is stored in ROM 208 of the wireless telephone apparatus 103 and ROM 302 of the facsimile apparatus 101 and executed by CPU 207 and CPU 301.

When a connection operation of the wireless telephone (PS) 103 to a radio channel is executed, it is checked whether the radio channel is established (whether PS is captured) (Step S401). When the radio channel is established, the wireless telephone apparatus enters a talking state in which a usual talking is performed via the radio channel 104 by the wireless telephone apparatus 103 itself (Step S402). If the connection operation by the wireless telephone apparatus 103 is not executed, the wireless telephone apparatus 103 remains in a standby state.

The wireless telephone apparatus (PS) 103 and facsimile apparatus (BS) 101 check whether they are connected together (Step S403). In this embodiment, although a connection between the wireless telephone apparatus and facsimile apparatus is checked after the start of wireless talking at Step S402, it may be checked before the start of wireless talking.

If the wireless telephone apparatus 103 is not connected to the facsimile apparatus 101, Steps S401 and S402 are repeated and the wireless telephone apparatus 103 executes by itself usual talking via the radio channel 104.

If the wireless telephone apparatus 103 is connected to the facsimile apparatus 101, talking paths of the wireless telephone apparatus (PS) 103 are switched (Step S404). Specifically, in order to transmit an audio signal from the microphone 108 of the facsimile apparatus 101 via the radio channel, an input path to the ADPCM codec 203 is switched from a contact 215a to a contact 215b by the switch 215, and in order to supply audio data of a received audio ADPCM code to the speaker 107 of the facsimile apparatus 101, the switch 216 changes its contact from a contact 216a to a contact 216b. With these operations, the talking path is connected to the connector 213 via the communication apparatus I/F unit 212.

Next, talking paths of the facsimile apparatus (BS) 101 are switched (Step S405). A signal from the connector 310 is input to the communication control unit 307 via the wireless telephone apparatus I/F unit 309. An audio input/output signal is switched to the line echo canceler side to cancel a line echo. An audio input/output signal to and from the speaker 107 and microphone 108 of the facsimile apparatus 101 is switched to the acoustic echo canceler side. The connection to the two echo cancelers may be switched upon generation of an echo.

After the talking paths of the wireless telephone apparatus 103 and facsimile apparatus 101 are switched at Steps S404 and S405, hands-free (HF) talking becomes possible at the facsimile apparatus 101 via the radio channel 104.

The wireless telephone apparatus 103 operates by using a power supplied from the facsimile apparatus 101 without using its battery 214 (Step S406). The communication apparatus I/F unit 212 switches between the battery (BAT) 214 and the power source of the facsimile apparatus 101, to thereby supply a power from the facsimile apparatus 101 to the wireless telephone apparatus 103 via the connectors 310 and 213. If the power source voltage of the facsimile apparatus 101 is higher than that of the battery 214 of the wireless telephone apparatus 103, the power is supplied from the facsimile apparatus 101 to the wireless telephone apparatus 103.

Thereafter, the wireless telephone apparatus 103 again checks the connection between the wireless telephone apparatus (PS) 103 and facsimile apparatus (BS) 101 (Step S407). If the connection is maintained, it is checked whether a disconnection of the radio channel is confirmed (Step S408). If not, the operations at Steps S406, S407 and S408 are repeated.

If the wireless telephone apparatus 103 judges at Step S408 that the radio channel was released or disconnected, an operation is executed to make the talking paths of the wireless telephone apparatus 103 take default paths (Step S409). Specifically, in order to transmit an audio signal from the microphone 106 via the radio channel, the input path to the ADPCM codec 203 is switched from the contact 215b to the contact 215a by the switch 215, and in order to output audio data of an ADPCM code received via the radio channel to the speaker 105, the switch 216 changes its contact from the contact 216b to the contact 216a. In this manner, the microphone 106 and speaker 105 are connected to the ADPCM codec 203.

Upon detection of a change of the talking paths of the wireless telephone apparatus 103 to the default paths, the wireless telephone apparatus 101 executes an operation of changing its talking paths to default paths (Step S410). Specifically, a connection of a signal from the connector 310 to the communication control unit 307 via the wireless telephone apparatus I/F unit 309 is released. The default paths for talking with the handset 311 via the public telephone line 308 are set for the usual talking operation.

For the hands-free talking via the public telephone line 308, an audio input/output signal to and from the communication control unit 307 via the public telephone line 308 is connected to the line echo canceler side, and an audio input/output signal to and from the speaker 107 and microphone 108 of the facsimile apparatus 101 is connected to the acoustic echo canceler, to thereby switch the talking paths. The connection to the two echo cancelers may be switched upon generation of an echo. With the above operations, the hands-free talking becomes possible.

In order to detect that the wireless telephone apparatus 103 sets the talking paths to the default paths, whether an audio signal is not input via the connector 310 may be detected or the digital I/F unit may inform setting of the default paths after the wireless telephone apparatus 103 has set the talking paths to the default paths at Step S409.

If the wireless telephone apparatus 103 is connected to the facsimile apparatus 101 although the radio channel 104 is not established, then a power of the facsimile apparatus 101 is supplied to a circuit for charging the battery 214 connected to the communication apparatus I/F unit 212 via the connector 310 of the facsimile apparatus 101 and the connector 213 of the wireless telephone apparatus 103, to charge the battery 214 (Step S411). Thereafter, the process returns to Step S401 whereat the wireless telephone apparatus 103 and facsimile apparatus 101 enter the standby state.

If a connection is not confirmed at Step S407 between the wireless telephone apparatus 103 and facsimile apparatus 101, then the wireless telephone apparatus 103 executes an operation of making the talking paths thereof take the default paths (Step S412). Specifically, in order to transmit an audio signal from the microphone 106 via the radio channel, the input path to the ADPCM codec 203 is switched from the contact 215b to the contact 215a by the switch 215, and in order to output audio data of an ADPCM code received via the radio channel to the speaker 105, the switch 216 changes its contact from the contact 216b to the contact 216a. In this manner, the microphone 106 and speaker 105 are connected to the ADPCM codec 203.

Upon detection of a change of the talking paths of the wireless telephone apparatus 103 to the default paths, the facsimile apparatus 101 also executes an operation of changing its talking paths to the default paths (Step S413). Specifically, as described previously, a connection of a signal from the connector 310 to the communication control unit 307 via the wireless telephone apparatus I/F unit 309 is released. The default paths for talking with the handset 311 via the public telephone line 308 are set for the usual talking operation.

For the hands-free talking via the public telephone line 308, an audio input/output signal to and from the communication control unit 307 via the public telephone line 308 is connected to the line echo canceler side, and an audio input/output signal to and from the speaker 107 and microphone 108 of the facsimile apparatus 101 is connected to the acoustic echo canceler, to thereby switch the talking paths. The connection to the two echo cancelers may be switched upon generation of an echo. With the above operations, the hands-free talking becomes possible.

The wireless telephone apparatus 103 can enter thereafter the usual talking state and can continue talking via the radio channel 104 by itself (Step S414). The facsimile apparatus 101 resumes the standby state.

As described above, the portable wireless telephone apparatus 103 of this embodiment has the talking function for wireless talking via the radio channel 104, and operates as the wireless adapter of the facsimile apparatus 101 when connected to the facsimile apparatus 101 or communication apparatus.

While the facsimile apparatus 101 is connected to the wireless telephone apparatus 103 and executes wireless talking via the radio channel 104, the wireless telephone apparatus 103 is used as the wireless adapter for wireless talking via the radio channel. Therefore, the hands-free talking becomes possible by using the microphone 108 and speaker 107 for input/output audio signals supplied via the radio channel.

If the wireless telephone apparatus 103 is connected to the facsimile apparatus 101 during talking, the hands-free talking becomes possible by using the microphone 108 and speaker 107 of the facsimile apparatus 101 and the echo cancelers. It is possible to automatically detect that the wireless telephone apparatus 103 is connected to the facsimile apparatus 101. It is also possible to supply a power from the wireless telephone apparatus 103 to the facsimile apparatus 101.

In this embodiment, although the facsimile apparatus having the hands-free talking function has been described, other apparatus may also be used if they have the hands-free talking function. For example, a hands-free talking apparatus may be realized by providing an information terminal apparatus such as a personal computer with hardware having the hands-free talking function and application software having the hands-free talking function. A simple telephone apparatus having the hands-free function may also be used.

In this embodiment, the hands-free talking is performed by using the microphone 108 and speaker 107 of the facsimile apparatus. The microphone and speaker of the handset 311 may be used for the hands-free talking even during wireless talking via the radio channel.

It is obvious that the invention is also applicable to a system or apparatus by supplying programs thereto. In this case, the system or apparatus can enjoy the advantageous effects of the invention by reading software programs realizing the invention from a storage medium.

Figs. 5A and 5B are memory maps of ROM 208 and ROM 302 as storage media. ROM 208 stores a hands-free talking process program module to be executed by CPU 207 of the wireless telephone apparatus 103, the program realizing a part of the operation illustrated in the flow chart of Fig. 4. Similarly, ROM 302 stores a hands-free talking process program module to be executed by CPU 301 of the facsimile apparatus 101, the program realizing a part of the operation illustrated in the flow chart of Fig. 4.

The program modules are stored in corresponding ones of ROM 208 of the wireless telephone apparatus 103 and ROM 302 of the facsimile apparatus 101, and executed by corresponding ones of CPU 207 and CPU 301. Instead, the program modules may be stored only in ROM 208 of the wireless telephone apparatus 103. In this case, when the wireless telephone apparatus 103 is connected to the facsimile apparatus 101, CPU 207 of the wireless telephone apparatus 103 transfers the program module to the CPU 301 of the facsimile apparatus 101 when necessary.

The storage medium storing the program module is not limited only to ROM, but other storage media may be used such as a floppy disk, a hard disk, an optical disk, a magnetooptical disk, a CD-ROM, a CD-R, a DVD, a magnetic tape, and a nonvolatile memory card.

As described so far, according to the present invention, the wireless telephone apparatus can be made compact and can facilitate outdoor use. In an indoor circumstance, hands-free talking of a good quality can be realized by using a communication apparatus such as a facsimile. A wireless telephone apparatus easier to use can be realized matching a use circumstance.

The wireless telephone apparatus has the talking function when it is connected at an indoor or outdoor to a public telephone line or a dedicated radio channel, and operates when it is connected to a communication apparatus. The communication apparatus performs wireless talking such as hands-free talking via a radio channel when it is connected to the wireless telephone apparatus. During the hands-free talking, a power consumption of the wireless telephone apparatus can be suppressed.

Communication via a base station is possible without degrading the merits of a wireless telephone apparatus. If the wireless telephone apparatus is connected to a communication apparatus such as a facsimile apparatus, then a talking means, a power supply circuit and echo cancelers respectively built in the facsimile apparatus can be used for communication.

The above described embodiments may be implemented using computer programs which may be supplied on a storage medium or via a network as an electronic signal. Such computer programs, storage media and electronic signals therefore constitute further aspects of the present invention.

## Claims

1. A communication system (101, 103) having a first communication apparatus (103) capable of a first speech communication via a first communication line (104) and a second communication apparatus (101) capable of a second speech communication via the first communication line (104) or a second communication line (308), comprising:
first speech means (105, 106) provided for the first communication apparatus for performing the first speech communication;
handset speech means (311) provided for the second communication apparatus for performing the second speech communication;
hands-free speech means (107, 108) provided for the second communication apparatus for performing the second speech communication;
first detecting means (212, 307) for detecting a connection between the first communication apparatus and the second communication apparatus; and
second detecting means (207) for detecting a connection status of the first communication line,
**characterized in that** the communication system has switching means (215, 216) for switching a speech communication from the first speech communication via the first communication line by said first speech means to the second speech communication via the first communication line by said hands-free speech means, and control means (207, 301) operable to control the switching means in accordance with detecting by said first detecting means and said second detecting means,
and wherein the control means maintains the speech communication over the first communication line even if there is a switch between the first speech communication by said first speech means and the second speech communication by said hands-free speech means.

2. A communication system according to claim 1, wherein said first detecting means is operable to detect the change of the connection status based on an electrical connection status.

3. A communication system according to claim 1, wherein said first detecting means detects the change of the connection status based on a physical connection status.

4. A communication system according to claim 1, wherein, in the case that the first and second communication apparatuses are disconnected with each other while the second speech communication via the first communication line by the hands-free speech means is performed, the control means is operable to control the switching means to switch from the second speech communication via the first communication line by the hands-free speech means to the first speech communication via the first communication line by the first speech means.

5. A communication system according to claim 1, further comprising supply means (309) for supplying a power from the second communication apparatus to the first communication apparatus, in accordance with the connection status between the first and second communication apparatus.

6. A communication system according to claim 5, wherein said supply means charges a battery of the first communication apparatus when said first communication apparatus does not perform speech communication.

7. A communication system according to claim 1, further comprising an echo canceller (307) provided for the second communication apparatus, said echo canceller being used for the second communication via the second communication line, wherein the second speech communication via the first communication line by said hands-free speech means is performed via said echo canceller.

8. A control method for a communication system (101, 103) having a first communication apparatus (103) capable of a first speech communication via a first communication line (104) and a second communication apparatus (101) capable of a second speech communication via the first communication line (104) or a second communication line (308), the first communication apparatus having a first speech device (105, 106) for performing the first speech communication, and the second communication apparatus having a handset speech device (311) and a hands-free speech device (107, 108) for performing the second speech communication, the method comprising:
a first detecting step (S403) of detecting a connection between the first and second communication apparatus; and
a second detecting step (S408) of detecting a connecting status of the first communication line, **characterized in that** the method has:
a switching step (S404, S405) of switching from the first speech communication via the first communication line by said first speech device to the second speech communication via the first communication line by said hands-free speech device, and controlling the switching step in accordance with detecting in said first detecting step and said second detecting step,
wherein the speech communication over the first communication line is maintained even if there is a switch between the first speech communication by said first speech device and the second speech communication by said hands-free speech device.

9. A storage medium storing instructions for controlling a system to carry out all of the steps of a method as claimed in claim 8.

## Patentansprüche

1. Kommunikationssystem (101, 103) mit einer
ersten Kommunikationsvorrichtung (103), die zu einer ersten Sprachkommunikation über eine erste Kommunikationsstrecke (104) fähig ist, und einer zweiten Kommunikationsvorrichtung (101), die zu einer zweiten Sprachkommunikation über die erste Kommunikationsstrecke (104) oder eine zweite Kommunikationsstrecke (308) fähig ist, mit:
einer ersten Spracheinrichtung (105, 106), die für die erste Kommunikationsvorrichtung zur Durchführung der ersten Sprachkommunikation bereitgestellt ist;
einer Handapparat-Spracheinrichtung (311), die für die zweite Kommunikationsvorrichtung zur Durchführung der zweiten Sprachkommunikation bereitgestellt ist;
einer Freihand-Spracheinrichtung (107, 108), die für die zweite Kommunikationsvorrichtung zur Durchführung der zweiten Sprachkommunikation bereitgestellt ist;
einer ersten Erfassungseinrichtung (212, 307) zur Erfassung einer Verbindung zwischen der ersten Kommunikationsvorrichtung und der zweiten Kommunikationsvorrichtung; und
einer zweiten Erfassungseinrichtung (207) zur Erfassung eines Verbindungszustands der ersten Kommunikationsstrecke,
**dadurch gekennzeichnet, dass** das Kommunikationssystem eine Umschalteinrichtung (215, 216) zur Umschaltung einer Sprachkommunikation von der ersten Sprachkommunikation über die erste Kommunikationsstrecke durch die erste Spracheinrichtung auf die zweite Sprachkommunikation über die erste Kommunikationsstrecke durch die Freihand-Spracheinrichtung und eine Steuereinrichtung (207, 301) aufweist, die betriebsfähig ist, die Umschalteinrichtung gemäß einer Erfassung durch die erste Erfassungseinrichtung und die zweite Erfassungseinrichtung zu steuern,
und wobei die Steuereinrichtung die Sprachkommunikation über die erste Kommunikationsstrecke selbst dann beibehält, wenn eine Umschaltung zwischen der ersten Sprachkommunikation durch die erste Spracheinrichtung und der zweiten Sprachkommunikation durch die Freihand-Spracheinrichtung erfolgt.

2. Kommunikationssystem gemäß Anspruch 1, bei dem die erste Erfassungseinrichtung betriebsfähig ist, die Änderung des Verbindungszustands basierend auf einem elektrischen Verbindungszustand zu erfassen.

3. Kommunikationssystem gemäß Anspruch 1, bei dem die erste Erfassungseinrichtung die Änderung des Verbindungszustands basierend auf einem physikalischen Verbindungszustand erfasst.

4. Kommunikationssystem gemäß Anspruch 1, bei dem in dem Fall, dass die erste und die zweite Kommunikationsvorrichtung voneinander getrennt werden, während die zweite Sprachkommunikation über die erste Kommunikationsstrecke durch die Freihand-Spracheinrichtung durchgeführt wird, die Steuereinrichtung betriebsfähig ist, die Umschalteinrichtung zu steuern, von der zweiten Sprachkommunikation über die erste Kommunikationsstrecke durch die Freihand-Spracheinrichtung auf die erste Sprachkommunikation über die erste Kommunikationsstrecke durch die erste Spracheinrichtung umzuschalten.

5. Kommunikationssystem gemäß Anspruch 1, zusätzlich mit einer Zuführungseinrichtung (309) zur Zuführung von Energie von der zweiten Kommunikationsvorrichtung an die erste Kommunikationsvorrichtung gemäß dem Verbindungszustand zwischen der ersten und der zweiten Kommunikationsvorrichtung.

6. Kommunikationssystem gemäß Anspruch 5, bei dem die Zuführungseinrichtung eine Batterie der ersten Kommunikationsvorrichtung auflädt, wenn die erste Kommunikationsvorrichtung keine Sprachkommunikation durchführt.

7. Kommunikationssystem gemäß Anspruch 1, zusätzlich mit einem für die zweite Kommunikationsvorrichtung bereitgestellten Echokompensator (307), wobei der Echokompensator für die zweite Kommunikation über die zweite Kommunikationsstrecke verwendet wird, wobei die zweite Sprachkommunikation über die erste Kommunikationsstrecke durch die Freihand-Spracheinrichtung über den Echokompensator durchgeführt wird.

8. Steuerverfahren für ein Kommunikationssystem (101, 103) mit einer ersten Kommunikationsvorrichtung (103), die zu einer ersten Sprachkommunikation über eine erste Kommunikationsstrecke (104) fähig ist, und einer zweiten Kommunikationsvorrichtung (101), die zu einer zweiten Sprachkommunikation über die erste Kommunikationsstrecke (104) oder eine zweite Kommunikationsstrecke (308) fähig ist, wobei die erste Kommunikationsvorrichtung eine erste Spracheinrichtung (105, 106) zur Durchführung der ersten Sprachkommunikation aufweist und die zweite Kommunikationsvorrichtung eine Handapparat-Spracheinrichtung (311) und eine Freihand-Spracheinrichtung (107, 108) zur Durchführung der zweiten Sprachkommunikation aufweist, mit:
einem ersten Erfassungsschritt (S403) zum Erfassen einer Verbindung zwischen der ersten und der zweiten Kommunikationsstrecke; und
einem zweiten Erfassungsschritt (S408) zum Erfassen eines Verbindungszustands der ersten Kommunikationsstrecke, **dadurch gekennzeichnet, dass** das Verfahren aufweist:
einen Umschaltschritt (S404, S405) zum Umschalten von der ersten Sprachkommunikation über die erste Kommunikationsstrecke durch die erste Spracheinrichtung auf die zweite Sprachkommunikation über die erste Kommunikationsstrecke durch die Freihand-Spracheinrichtung und eine Steuerung des Umschaltschritts gemäß einer Erfassung in dem ersten Erfassungsschritt und dem zweiten Erfassungsschritt,
wobei die Sprachkommunikation über die erste Kommunikationsstrecke selbst dann beibehalten wird, wenn eine Umschaltung zwischen der ersten Sprachkommunikation durch die erste Spracheinrichtung und der zweiten Sprachkommunikation durch die Freihand-Spracheinrichtung erfolgt.

9. Speichermedium, das Anweisungen zur Steuerung eines Systems speichert, um alle Schritte eines Verfahrens gemäß Anspruch 8 durchzuführen.

## Revendications

1. Système de communication (101, 103) ayant un premier appareil de communication (103) capable d'une première communication vocale par une première ligne de communication (104) et un second appareil de communication (101) capable d'une seconde communication vocale par la première ligne de communication (104) ou une seconde ligne de communication (308), comportant :
un premier moyen vocal (105, 106) prévu pour le premier appareil de communication pour exécuter la première communication vocale ;
un moyen vocal (311) de combiné prévu pour le second appareil de communication pour effectuer la seconde communication vocale ;
un moyen vocal mains libres (107, 108) prévu pour le second appareil de communication pour exécuter la seconde communication vocale ;
un premier moyen de détection (212, 307) destiné à détecter une connexion entre le premier appareil de communication et le second appareil de communication ; et
un second moyen de détection (207) destiné à détecter un état de connexion de la première ligne de communication,
**caractérisé en ce que** le système de communication comporte un moyen de commutation (215, 216) destiné à commuter une communication vocale depuis la première communication vocale passant par la première ligne de communication par ledit premier moyen vocal à la seconde communication vocale passant par la première ligne de communication par ledit moyen vocal mains libres, et un moyen de commande (207, 301) pouvant être mis en oeuvre pour commander le moyen de commutation conformément à une détection par ledit premier moyen de détection et ledit second moyen de détection,
et dans lequel le moyen de commande maintient la communication vocale sur la première ligne de communication même s'il y a une commutation entre la première communication vocale par ledit premier moyen vocal et la seconde communication vocale par ledit moyen vocal mains libres.

2. Système de communication selon la revendication 1, dans lequel ledit premier moyen de détection peut être mis en oeuvre pour détecter le changement de l'état de connexion sur la base d'un état de connexion électrique.

3. Système de communication selon la revendication 1, dans lequel ledit premier moyen de détection détecte le changement de l'état de connexion sur la base d'un état de connexion physique.

4. Système de communication selon la revendication 1, dans lequel, dans le cas où les premier et second appareils de communication sont déconnectés l'un de l'autre alors que la seconde communication vocale passant par la première ligne de communication par le moyen vocal mains libres et en cours d'exécution, le moyen de commande peut être mis en oeuvre pour commander le moyen de commutation afin d'effectuer une commutation depuis la seconde communication vocale passant par la première ligne de communication par le moyen vocal mains libres à la première communication vocale passant par la première ligne de communication par le premier moyen vocal.

5. Système de communication selon la revendication 1, comportant en outre un moyen d'alimentation (309) destiné à réaliser une alimentation en énergie du second appareil de communication vers le premier appareil de communication, conformément à l'état de connexion entre les premier et second appareils de communication.

6. Système de communication selon la revendication 5, dans lequel ledit moyen d'alimentation charge une batterie du premier appareil de communication lorsque ledit premier appareil de communication n'effectue pas de communication vocale.

7. Système de communication selon la revendication 1, comportant en outre un suppresseur d'écho (307) prévu pour le second appareil de communication, ledit suppresseur d'écho étant utilisé pour la seconde communication passant par la seconde ligne de communication, dans lequel la seconde communication vocale passant par la première ligne de communication par ledit moyen vocal mains libres est exécutée en passant par ledit suppresseur d'écho.

8. Procédé de commande pour un système de communication (101, 103) ayant un premier appareil de communication (103) capable d'une première communication vocale passant par une première ligne de communication (104) et un second appareil de communication (101) capable d'une seconde communication vocale passant par la première ligne de communication (104) ou par une seconde ligne de communication (308), le premier appareil de communication ayant un premier dispositif vocal (105, 106) pour exécuter la première communication vocale, et le second appareil de communication ayant un dispositif vocal de combiné (311) et un dispositif vocal mains libres (107, 108) pour exécuter la seconde communication vocale, le procédé comprenant:
une première étape de détection (S403) consistant à détecter une connexion entre les premier et second appareils de communication ; et
une seconde étape de détection (S408) consistant à détecter un état de connexion de la première ligne de communication, **caractérisé en ce que** le procédé comprend :
une étape de commutation (S404, S405) consistant à passer par communication de la première communication vocale passant par la première ligne de communication par ledit premier dispositif vocal à la seconde communication vocale passant par la première ligne de communication par ledit dispositif vocal à combiné, et à commander l'étape de commutation conformément à la détection dans ladite première étape de détection et dans ladite seconde étape de détection,
dans lequel la communication vocale sur la première ligne de communication est maintenue même s'il y a une commutation entre la première communication vocale par ledit premier dispositif vocal et la seconde communication vocale par ledit dispositif vocal mains libres.

9. Support de stockage stockant des instructions pour la commande d'un système afin d'exécuter la totalité des étapes du procédé selon la revendication 8.
